# EUROPÄISCHE PATENTANMELDUNG

(11) **EP 2 664 819 A1**
(43) Veröffentlichungstag der Anmeldung: **20.11.2013**
(21) Anmeldenummer: 12168385.8
(22) Anmeldetag: 16.05.2012
(51) Int. Cl.: F16F 15/26, F02B 75/06, F02F 7/00

(54) **Kreuzkopf-Grossdieselmotor, sowie ein Ständer und ein Schwingungskompensator für einen Kreuzkopf-Grossdieselmotor**

(71) Anmelder: Wärtsilä Schweiz AG, 8401 Winterthur (CH)
(72) Erfinder: Sönnichsen, Samuel, 8400 Winterthur (CH)
(74) Vertreter: Sulzer Management AG

(57) **Zusammenfassung**

Die Erfindung betrifft einen Kreuzkopf-Grossdieselmotor (1) mit einer Grundplatte (2) zur Aufnahme einer Kurbelwelle (3), einem zwei Aussenwände (4) umfassenden Ständer (5), welcher auf der Grundplatte (2) angeordnet ist, sowie zur Aufnahme von Zylindern eine auf dem Ständer (5) angeordnete Zylindersektion (6). Dabei sind die Grundplatte (2), der Ständer (5) und die Zylindersektion (6) durch einen Zuganker (7) miteinander verbunden, der sich im Bereich des Ständers (5) entlang einer Stützwand (8, 81, 82) erstreckt, wobei an der Stützwand (8, 81, 82) zur Abstützung eines Kreuzkopfes eine Gleitfläche (9) ausgebildet ist. An einer Endseite (10) des Ständers (5) sind eine erste transversale Stützwand (8, 81) und eine zweite transversale Stützwand (8, 82) gegenüberliegend zueinander in Bezug auf die Kurbelwelle (3) angeordnet und über eine Zwischenwand (11) miteinander verbunden, wobei zur Kompensation von Schwingungen ein Schwingungskompensator (12) an der Endseite (10) des Ständer (5) vorgesehen ist. Erfindungsgemäss ist der Schwingungskompensator (12) zwischen der ersten Stützwand (81) und der zweiten Stützwand (82) ausgebildet. Darüber hinaus betrifft die Erfindung einen Schwingungskompensator (12) für einen Kreuzkopf-Grossdieselmotor (1).

## Beschreibung

Die Erfindung betrifft einen Kreuzkopf-Grossdieselmotor, sowie einen Ständer und einen Schwingungskompensator für einen Kreuzkopf-Grossdieselmotor gemäss dem Oberbegriff der unabhängigen Ansprüche.

Ein Grossdieselmotor der Kreuzkopfbauart, wie er bevorzugt im Schiffsbau oder in stationären Anlagen, beispielsweise zur Erzeugung elektrischer Energie zum Einsatz kommt, umfasst drei grosse Gehäusesegmente, die den Rahmen des Motors bilden. Auf einer Grundplatte, die neben einem Lagersattel mit Kurbelwellenhauptlager zur Aufnahme der Kurbelwelle transversale Stützelemente aufweist, ist, getrennt durch eine Bodenplatte, ein sogenannter Ständer angeordnet. Die aus dem Stand der Technik bekannten Ständer umfassen entsprechend der Anzahl der Zylinder des Grossdieselmotors mehrere gegenüber angeordnete Stützkörper, die jeweils eine senkrecht verlaufende Gleitfläche zur Führung zweier benachbarter Kreuzköpfe, die über Schubstangen mit der Kurbelwelle verbunden sind, aufweisen. Dabei werden jeweils zwei gegenüberliegende senkrecht verlaufende Stützkörper mit Gleitflächen durch eine Zwischenwand zusätzlich abgestützt. Die einzelnen Stützkörper sind in der Regel durch ein gemeinsames Deckblech miteinander verbunden. Oberhalb des Ständers ist dann am Deckblech eine Zylindersektion, häufig auch Zylindermantel genannt angeordnet, die zur Aufnahme mehrerer Zylinderliner geeignet ist. Die Grundplatte, der Ständer und die Zylindersektion werden dabei durch Zuganker, die sich im Bereich des Ständers in aller Regel innerhalb der Stützkörper erstrecken, miteinander verbunden, indem die Zuganker in oder an der Grundplatte unter erheblicher Vorspannung verschraubt werden.

Dabei sind verschiedene Typen von Ständern bekannt, die unterschiedliche Problem bezüglich Stabilität und Verschleiss adressieren und entsprechende optimierte Lösungen dafür vorschlagen.

Aus der DE 3 512 347 C1 ist ein Ständer mit einer Abstützung für Kreuzkopfgleitbahnen von Kolbenmaschinen bekannt, bei dem die Abstützung doppelwandig ausgestaltet ist. Der Ständer, auf welchem ein Zylindermantel zur Aufnahme von Zylinderlinern platziert ist, ist auf Bodenblechen auf einer Grundplatte angeordnet, wobei die Bodenbleche zusammen mit schräg verlaufenden Aussenwänden und senkrechten Gleitflächen zwei im Querschnitt trapezförmige Rahmen bilden, die durch ein gemeinsames Deckblech miteinander verbunden sind. Zwischen den Aussenwänden und den Gleitflächen sind die trapezförmigen Rahmen durch transversale Stützwände ausgefüllt, so dass sich als Abstützung ein doppelwandig ausgestalteter Stützkörper ergibt. Die Grundplatte umfasst einen Lagersattel mit einer unteren und einer oberen Lagerschale mit Lagerdeckel, in welcher Lagerschale die Kurbelwelle im Lagersattel der Grundplatte gelagert ist. Zylindermantel, Ständer und Grundplatte des Motors werden von Zugankern zusammengehalten, die unter Vorspannung unterhalb der Kurbelwelle am oder im Lagersattel fixiert sind.

In der EP 0 774 061 ist ein doppelwandiger Stützkörper mit dreieckigem Querschnitt offenbart, in welchem jeweils zwei Zuganker geführt sind.

Bei solchen bekannten Kreuzkopf-Grossdieselmotoren sind die doppelwandig ausgestalteten Stützkörper des Ständers auf ebenfalls doppelwandig ausgestalteten Stützelementen in der Grundplatte abgestützt. Das heisst, sowohl der Ständer als auch die Grundplatte sind durch transversale Stützwände doppelwandig ausgestaltet.

Dabei sind jedoch im Stand der Technik auch Grossdieselmotoren bekannt, bei welchen die Grundplatte durch transversale Stützwände gebildet wird, die einwandig ausgestaltet ist. Eine solche verbesserte Lösung hat die Anmelderin bereits vor einigen Jahren in der EP 1 382 829 B1 vorgeschlagen, die durch die Ausgestaltung gemäss CH 700 755 noch entscheidend verbessert werden konnte.

Zwei gegenüber angeordnete Stützkörper werden dabei gegeneinander und im Ständer selbst durch die bereits erwähnten Zwischenwände über Schweissnähte fixiert.

Ein wesentliches, an sich bekanntes Problem, sind dabei die Schwingungen, die beim Betrieb solcher enormen Motoren, die oft bis zu oder sogar mehr als 10.000 KW Leistung pro Zylinder haben, induziert werden, insbesondere in die Umgebung induziert werden, in der solche Motoren installiert sind. Heute bekannte Motoren für Schiffe haben dabei z.B. oftmals bis zu 12 oder gar 14 Zylinder, die im Betriebszustand derart starke Schwingungen in den Schiffsrumpf induzieren können, dass dieser massiven Schaden erleiden würde oder gar zerstört würde, wenn keine geeigneten Gegenmassnahmen vorgesehen würden.

Zur Reduzierung bzw. Kompensation der vorgenannten schädlichen Schwingungen ist es seit langem bekannt, Schwingungskompensatoren vorzusehen, deren Aufgabe es ist, die beim Betrieb auftretenden schädlichen Schwingungen zumindest teilweise zu kompensieren. Wie dem Fachmann hinlänglich bekannt ist, werden diese schädlichen Schwingungen hauptsächlich durch nicht ausbalancierte, oszillierende oder rotierende Massen des Motors erzeugt, wobei das Moment 2. Ordnung der Schwingungen in der Regel den grössten negativen Einfluss hat. Insbesondere das Moment 2. Ordnung bildet beispielweise in einem Schiff eine Art von vertikal wirkender stehender Welle mit Wellenbäuchen und Wellenknoten über den Schiffsrumpf aus, die in den Wellenbäuchen zu erheblichen mechanischen Belastungen führen, die unbedingt verhindert, zumindest minimiert werden müssen.

Dazu ist es seit langem bekannt, am Motor, insbesondere an einem Zweitakt Kreuzkopf-Grossdieselmotor für Schiffe, Schwingungskompensatoren vorzusehen. Diese Schwingungskompensatoren umfassen in der Regel zwei gegenläufig rotierende Kompensatormassen, die mindestens an einem Ende, in bestimmten Fällen sogar gleichzeitig an beiden Enden des Ständers, also entweder an der Abtriebsseite des Motors, wo die Motorleistung abgenommen wird, also beispielsweise wo die Welle der Schiffsschraube angeschlossen wird. Alternativ oder zusätzlich kann der Schwingungskompensator aber auch an dem der Abtriebsseite gegenüberliegenden Ende des Motors, dem sogenannten freien Ende des Motors vorgesehen werden.

Die bekannten Schwingungskompensatoren sind dabei in einem Kompensatorgehäuse untergebracht, dass an der Abriebsseite und / oder am freien Ende des Motors aussen am Ständer angebracht, z.B. angeschraubt oder angeschweisst ist. Die Kompensatormassen sind dabei häufig dicke, sehr schwere halbkreisartige Scheiben, die je nach Grösse des Motors und Stärke der schädlichen Schwingungen zum Beispiel nahezu 1000Kg Masse haben können. Sie sind dabei übereinander und symmetrisch zur Längsachse des Motors angeordnet und rotieren gegenläufig mit der doppelten Motordrehzahl und einer geeigneten Phase in Bezug auf den Kurbelwinkelverlauf des Motors, wobei die Phase zwischen den rotierenden Kompensatormassen und dem Kurbelwinkelverlauf des Motors gerade so gewählt wird, dass die oben erwähnten zweiten Momente der schädlichen Schwingungen kompensiert bzw. zumindest ausreichend minimiert werden. Der Drehantrieb der Kompensatormassen kann dabei durch eine direkte Kopplung über Wellen, Zahnräder, Ketten oder dergleichen erfolgen, was den Vorteil hat, dass die Phase zwischen rotierenden Massen und dem Kurbelwinkel des Motors durch die mechanische Kopplung, unabhängig von der Drehzahl des Motors fest einstellbar ist, so dass die Drehgeschwindigkeit und die Phase der rotierenden Kompensatormassen nicht gesteuert und /oder geregelt werden muss.

Es sind aber Lösungen bekannt, bei welchen die Kompensatormassen elektrisch angetrieben werden. Solche Lösungen sind naturgemäss flexibler, was die Installation der Schwingungskompensatoren am Motor angeht. Allerdings müssen die elektrischen Drehantriebe selbstverständlich dann über eine Ansteuerung verfügen, die abhängig von der Drehzahl des Motors immer die richtige Drehgeschwindigkeit und Phase der rotierenden Kompensatormassen automatisch einstellt.

Ein wesentlicher Nachteil der aussen am Ständer angeordneten Schwingungskompensatoren besteht darin, dass die rotierenden Massen erhebliche Kräfte erzeugen, die über die Schweissnähte, an denen der Schwingungskompensator am Ständer aufgehängt ist, an den Ständer übertragen werden. Das führt in der Praxis zu Schäden an den Schweissnähten sowie an den Stützwänden und den daran vorgesehenen Gleitbahnen für den Kreuzkopf. Ein wesentlicher Grund besteht darin, dass die Schwingungskompensatoren übereinander derart kämmend rotierend angeordnet sind, dass resultierende Kraftmomente in vertikaler und / oder horizontaler Richtung entstehen, d.h. der Schwingungskompensator führt dadurch periodische Kippbewegungen und Biegemomente aus, die über die Schweissnähte an den Ständer übertragen werden müssen und daher die Schweissnähte entsprechend belasten. Kämmend rotierend bedeutet dabei, dass die Drehachsen der beiden rotierenden Kompensatormassen weniger als ein doppelter Rotationsradius der Kompensatormassen voneinander entfernt sind.

Ausgehend vom Stand der Technik ist es daher eine Aufgabe der Erfindung, einen verbesserten Kreuzkopf-Grossdieselmotor, sowie einen verbesserten Schwingungskompensator vorzuschlagen, bei welchem die aus dem Stand der Technik bekannten Nachteile vermieden werden und insbesondere die Übertragung der Kräfte des Schwingungskompensators auf den Ständer optimiert wird, so dass die die Kräfte übertragenden Kontaktstellen zwischen Schwingungskompensator und Ständer möglichst wenig bzw. gleichmässig belastet werden.

Die diese Aufgaben lösenden Gegenstände der Erfindung sind durch die Merkmale der unabhängigen Ansprüche gekennzeichnet.

Die abhängigen Ansprüche beziehen sich auf besonders vorteilhafte Ausführungsformen der Erfindung.

Die Erfindung betrifft somit einen Kreuzkopf-Grossdieselmotor mit einer Grundplatte zur Aufnahme einer Kurbelwelle, einem zwei Aussenwände umfassenden Ständer, welcher auf der Grundplatte angeordnet ist, sowie zur Aufnahme von Zylindern eine auf dem Stände angeordnete Zylindersektion. Dabei sind die Grundplatte, der Ständer und die Zylindersektion durch einen Zuganker miteinander verbunden, der sich im Bereich des Ständers entlang einer Stützwand erstreckt, wobei an der Stützwand zur Abstützung eines Kreuzkopfes eine Gleitfläche ausgebildet ist. An einer Endseite des Ständers sind eine erste transversale Stützwand und eine zweite transversale Stützwand gegenüberliegend zueinander in Bezug auf die Kurbelwelle angeordnet und über eine Zwischenwand miteinander verbunden, wobei zur Kompensation von Schwingungen ein Schwingungskompensator an der Endseite des Ständer vorgesehen ist. Erfindungsgemäss ist der Schwingungskompensator zwischen der ersten Stützwand und der zweiten Stützwand ausgebildet.

Damit ist es durch die vorliegende Erfindung erstmals gelungen, die aus dem Stand der Technik bekannten Nachteile, die der aussen am Ständer angeordnete Schwingungskompensator mit sich bringt zu vermeiden. Zwar erzeugen die rotierenden Kompensatormassen des Schwingungskompensators auch bei einem erfindungsgemässen Kreuzkopf-Grossdieselmotor erhebliche Kräfte. D.h., auch bei einem Schwingungskompensator der vorliegenden Erfindung sind die Kompensatormassen bevorzugt derart übereinander und kämmend rotierend angeordnet, dass resultierende Kraftmomente in vertikaler und / oder horizontaler Richtung entstehen können, wodurch der Schwingungskompensator zu periodischen Kippmomenten bzw. Kippkräften angeregt werden kann. Diese werden aber bei einem erfindungsgemässen Kreuzkopf-Grossdieselmotor nicht über die Schweissnähte zwischen Kompensatorgehäuse und Ständer, an welchen Schweissnähten der Schwingungskompensator am Ständer letztlich aufgehängt ist, an den Ständer übertragen. Sondern dadurch, dass der Schwingungskompensator bzw. das Kompensatorgehäuse des Schwingungskompensators erfindungsgemäss zwischen der ersten Stützwand und der zweiten Stützwand ausgebildet ist, werden die periodischen Kippmomente bzw. Kippkräfte direkt in die Stützwände bzw. eventuell über die Zwischenwand, die bevorzugt als Rückwand für das Kompensatorgehäuse ausgebildet ist, abgeleitet. Dadurch werden durch die Erfindung die befürchteten Schäden an den Schweissnähten, und in Folge dessen an den Stützwänden und den daran vorgesehenen Gleitbahnen für den Kreuzkopf nunmehr vermieden.

In einem für die Praxis besonders bevorzugten Ausführungsbeispiel kann der Schwingungskompensator wie bereits erwähnt derart an der Zwischenwand ausgebildet sein, dass die Zwischenwand den Schwingungskompensator zusätzlich trägt. Dadurch kann zumindest ein Teil der erwähnten Kräfte und Kippmomente auch über die Zwischenwand in den Ständer eingeleitet werden, wodurch die Schweissnähte des Schwingungskompensators bzw. des Kompensatorgehäuses zusätzlich entlastet werden können.

Der Schwingungskompensator umfasst dabei in der Regel zwei, im Betriebszustand gegenläufig rotierende Kompensatormassen, die meist in Form von Teilscheiben, oft als halbmondartige Scheiben ausgebildet sind, aber im Prinzip jede geeignete asymmetrische Form haben können die geeignet ist, die in den Motor induzierten schädlichen Schwingungen zu unterdrücken bzw. zu reduzieren. Die Kompensatormassen sind dabei bevorzugt derart zueinander angeordnet, dass sie im Betriebszustand kämmend rotieren und sind in der Praxis in Bezug auf die Kurbelwelle meistens vertikal übereinander angeordnet, allein schon aus baulichen Gründen, weil sonst der Schwingungskompensator aus Platzgründen in den meisten Fällen nicht zwischen den Stützwänden platziert werden kann.

Ein Schwingungskompensator kann dabei je nach Anforderungen an einer Endseite der Abtriebsseite und / oder an einer Endseite des freien Endes des Kreuzkopf-Grossdieselmotors vorgesehen werden. Für welche der drei Varianten der Fachmann sich dabei im Einzelfall entscheidet kann von verschiedenen Faktoren abhängen. Beispielsweise vom Typ des Schiffes, in das der Kreuzkopf-Grossdieselmotor eingebaut werden soll, je nach dem wie stark die induzierten schädlichen Schwingungen ausgebildet sind, wie stark die Schwingungen abgedämpft werden müssen oder kann von anderen, dem Fachmann an sich bekannten Faktoren oder Vorgaben abhängen.

Die Kompensatormassen selbst können dabei in an sich bekannter Weise über ein mechanisches Kopplungsmittel antreibbar sind, insbesondere mittels einer Welle, eines Zahnrads, einer Kette, eines Zahnriemens oder mittels eines anderen Kopplungsmittels antreibbar sein, und / oder können auch mittels eines separaten Drehantriebs, insbesondere mittels eines elektrischen, hydraulischen, oder pneumatischen Drehantrieb antreibbar sein, wobei im Falle eines separaten Drehantriebs in der Praxis eine geeignete Ansteuerung in Form einer Steuerung oder Regelung vorgesehen wird, damit die Kompensatormassen immer mit der entsprechenden Phase und doppelten Drehzahl des Kreuzkopf-Grossdieselmotors rotieren.

Die Erfindung betrifft weiter einen Schwingungskompensator für einen Kreuzkopf-Grossdieselmotor, wie er in der vorliegenden Anmeldung beschrieben ist, wobei der Schwingungskompensator zwischen einer ersten Stützwand und einer zweiten Stützwand des Kreuzkopf-Grossdieselmotors ausbildbar ist und bevorzugt derart an einer Zwischenwand des Ständers ausbildbar ist, dass die Zwischenwand den Schwingungskompensator zusätzlich trägt.

Der Schwingungskompensator umfasst bevorzugt zwei, im Betriebszustand gegenläufig rotierende Kompensatormassen, die in der Praxis häufig in Form von Teilscheiben, insbesondere halbmondartig ausgestaltet sein können, und im Einbauzustand in Bezug auf die Kurbelwelle derart vertikal übereinander angeordnet sind, dass sie im Betriebszustand kämmend rotieren.

Die Kompensatormassen selbst können dabei über ein mechanisches Kopplungsmittel, insbesondere mittels einer Welle, eines Zahnrads, einer Kette, eines Zahnriemens oder mittels eines anderen Kopplungsmittels antreibbar sein, oder auch mittels eines separaten Drehantriebs, insbesondere mittels eines elektrischen, hydraulischen, oder pneumatischen Drehantrieb antreibbar sein.

Die Erfindung wird im Folgenden an Hand der Zeichnung näher erläutert. Es zeigen in schematischer Darstellung:
- Fig. 1: Ansicht eines erfindungsgemässen Kreuzkopf-Grossdieselmotor mit Grundplatte, Ständer und Zylindersektion;
- Fig. 2: einen vergrösserten Ausschnitt des Kompensatorgehäuses gemäss Fig. 1;
- Fig. 3: schematische Darstellung der wirkenden Kräfte und Momente der Kompensatormassen bei vertikaler und kämmender Anordnung.

Der erfindungsgemässe Kreuzkopf-Grossdieselmotor, der im folgenden gesamthaft mit dem Bezugszeichen 1 bezeichnet wird, ist insbesondere als Zweitakt-Grossdieselmotor 1 mit Längsspülung ausgelegt, wie er beispielsweise im Schiffsbau verbreitet Verwendung findet.

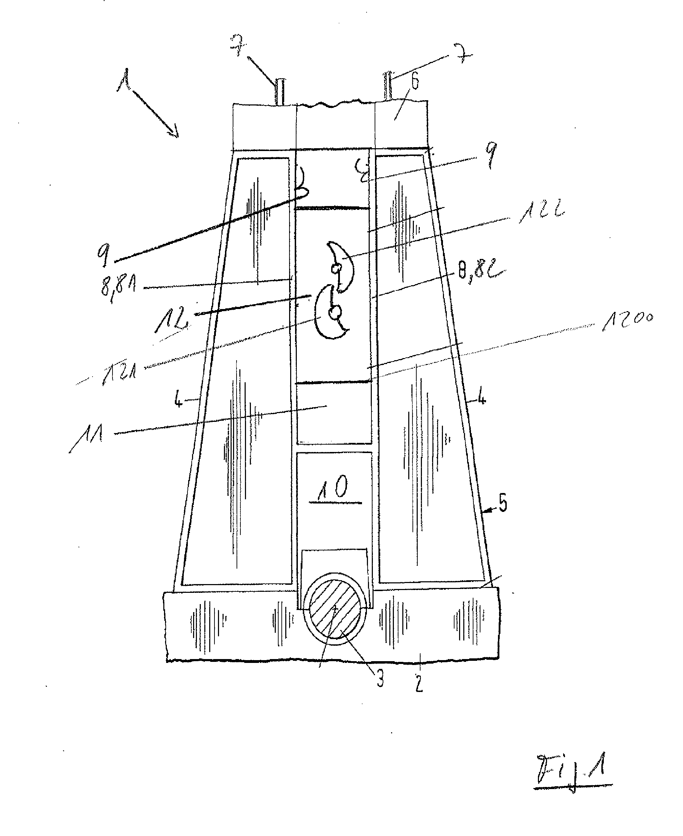

Fig. 1 zeigt schematisch im Schnitt einen Aufbau eines erfindungsgemässen Kreuzkopf-Grossdieselmotors 1 mit Grundplatte 2, Ständer 5 und Zylindersektion 6, die aus Gründen der Übersicht lediglich in ihrem unteren Bereich angedeutet ist. Der in Fig. 1 dargestellte äussere Aufbau ist dabei, abgesehen von der Anordnung des Schwingungskompensators zwischen den Stützwänden, im Wesentlichen identisch zum äusseren Erscheinungsbild eines bekannten Kreuzkopf-Grossdieselmotors.

Die Zylindersektion 6 dient in an sich bekannter Weise zur Aufnahme von nicht dargestellten Zylindern. Der Ständer 5, der beispielsweise durch Zusammenschweissen von Stahlblechen entstanden ist, weist ein Bodenblech sowie zwei Aussenwände 4 auf und bildet gemeinsam mit den darstellungsgemäss senkrecht, also transversal verlaufenden Gleitflächen 9 zwei im Querschnitt trapezförmige Rahmen, die durch ein gemeinsames Deckblech miteinander verbunden sind. Die zwei gegenüberliegenden senkrecht verlaufenden Gleitflächen 9 werden durch eine Zwischenwand 11, die zwischen den beiden trapezförmigen Rahmen angeordnet ist, abgestützt. Der Ständer 5 ist mit dem Bodenblech auf der Grundplatte 2 angeordnet, die einen Lagersattel mit Lagerschale zur Lagerung einer Kurbelwelle 3 umfasst. Die Kurbelwelle 3 ist in an sich bekannter Weise mit einem nicht näher dargestellten Kreuzkopf über eine in Fig. 1 ebenfalls nicht gezeigte Schubstange verbunden.

Gemäss der vorliegenden Erfindung ist ein Schwingungskompensator 12 zur Kompensation von Schwingungen an einer Endseite 10 des Ständer 5 zwischen einer ersten Stützwand 81 und einer zweiten Stützwand 82 ausgebildet, wobei im vorliegenden Ausführungsbeispiel der Fig. 1 der Schwingungskompensator 12 derart an der Zwischenwand 11 ausgebildet ist, dass die Zwischenwand 11 den Schwingungskompensator 12 zusätzlich trägt. Die in Fig. 1 nur schematisch dargestellte Endseite 10 des Kreuzkopf-Grossdieselmotors 1 kann dabei entweder die Abtriebsseite sein, an der die Motorleistung zum Beispiel auf eine Schiffsschraube übertragen wird oder aber auch das der Abtriebsseite gegenüberliegende freie Ende des Motors sein.

Der Schwingungskompensator 12 umfasst dabei ein Kompensatorgehäuse 1200, sowie zwei im Betriebszustand gegenläufig rotierende Kompensatormassen 121, 122. Die Kompensatormassen 121, 122 des speziellen Ausführungsbeispiels der Fig. 1 sind dabei in Form von Teilscheiben, halbmondartig ausgestaltet und in Bezug auf die Kurbelwelle 3 derart vertikal übereinander angeordnet, dass sie im Betriebszustand kämmend umeinander rotieren. In der Regel wird das Kompensatorgehäuse einen Deckel besitzen, so dass im Betriebszustand die Kompensatormassen 121, 122 von aussen nicht zu sehen sind.

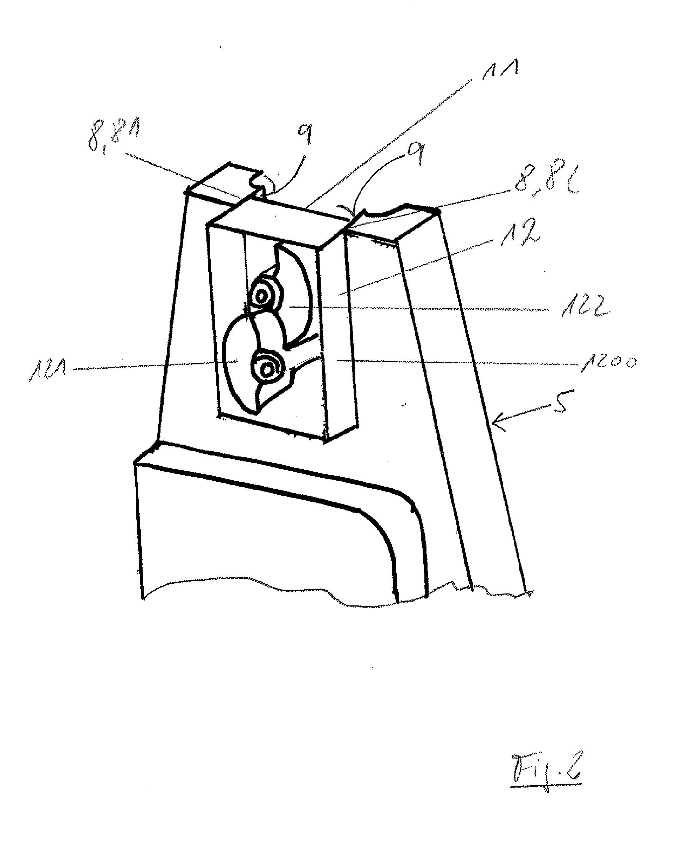

Fig. 2 zeigt nur zur Verdeutlichung einen vergrösserten Ausschnitt des Kompensatorgehäuses gemäss Fig. 1 im Einbauzustand. Es ist deutlich zu erkennen, wie der Schwingungskompensator 12 zwischen der ersten Stützwand 81 und der zweiten Stützwand 82 an der Zwischenwand 11 derart ausgebildet ist, dass die Gleitflächen 9 soweit frei bleiben, dass der nicht dargestellte Kreuzkopf ohne Behinderung entlang der Gleitflächen 9 in dargstellungsgemäss vertikaler Richtung im Betriebszustand geführt werden kann.

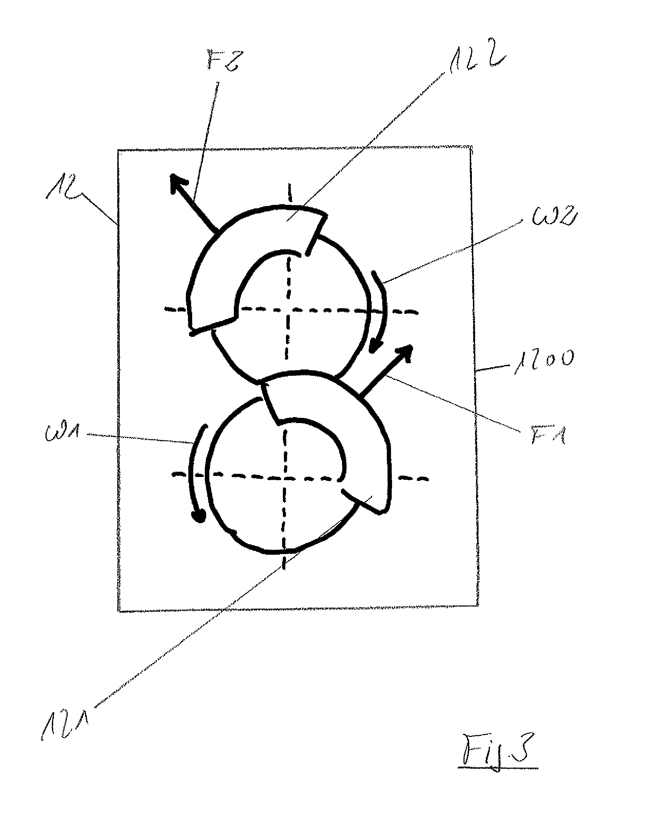

Anhand der schematischen Fig. 3 sind schliesslich die wirkenden Momente bzw. Kräfte F1 und F2 der Kompensatormassen 121, 122 bei vertikaler und kämmender Anordnung dargestellt, wenn die Kompensatormasse 121 mit Rotationsrichtung ω1 und die Kompensatormasse 122 mit entgegen gesetzter Rotationsrichtung ω2 gegeneinander rotieren. Da die Kompensatormassen 121, 122 kämmend gegeneinander rotieren, was wie eingangs erläutert bedeutet, dass die Drehachsen der beiden rotierenden Kompensatormassen 121, 122 weniger als ein doppelter Rotationsradius der Kompensatormassen 121, 122 voneinander entfernt sind, entstehen, wie dem Fachmann wohl bekannt ist, periodische variierende Kräftepaare F1, F2, die zu periodischen Kippbelastungen führen, da sowohl vertikal als auch horizontal resultierende Kraftmomente, mit zeitlich und örtlich variierender Gesamtkomponente entstehen, die zu den aus dem Stand der Technik bekannten Belastungen der Schweissnähte des Schwingungskompensator 12 führen, die durch die vorliegende Erfindung vermieden werden.

Der Fachmann versteht, dass die Erfindung nicht auf die explizit diskutierten Ausführungsbeispiele beschränkt ist, sondern entsprechende Weiterbildungen ebenfalls von der Erfindung abgedeckt sind. Insbesondere betrifft die Erfindung selbstverständlich alle geeigneten Kombinationen der diskutierten speziellen Ausführungsformen.

## Patentansprüche

1. Kreuzkopf-Grossdieselmotor mit einer Grundplatte (2) zur Aufnahme einer Kurbelwelle (3), einem zwei Aussenwände (4) umfassenden Ständer (5), welcher auf der Grundplatte (2) angeordnet ist, sowie zur Aufnahme von Zylindern eine auf dem Ständer (5) angeordnete Zylindersektion (6), wobei die Grundplatte (2), der Ständer (5) und die Zylindersektion (6) durch einen Zuganker (7) miteinander verbunden sind, der sich im Bereich des Ständers (5) entlang einer Stützwand (8, 81, 82) erstreckt, und an der Stützwand (8, 81, 82) zur Abstützung eines Kreuzkopfes eine Gleitfläche (9) ausgebildet ist, wobei an einer Endseite (10) des Ständers (5) eine erste transversale Stützwand (8, 81) und eine zweite transversale Stützwand (8, 82) gegenüberliegend zueinander in Bezug auf die Kurbelwelle (3) angeordnet und über eine Zwischenwand (11) miteinander verbunden sind, und zur Kompensation von Schwingungen ein Schwingungskompensator (12) an der Endseite (10) des Ständer (5) vorgesehen ist, **dadurch gekennzeichnet dass** der Schwingungskompensator (12) zwischen der ersten Stützwand (81) und der zweiten Stützwand (82) ausgebildet ist.

2. Kreuzkopf-Grossdieselmotor nach Anspruch 1, wobei der Schwingungskompensator (12) derart an der Zwischenwand (11) ausgebildet ist, dass die Zwischenwand (11) den Schwingungskompensator (12) zusätzlich trägt.

3. Kreuzkopf-Grossdieselmotor nach einem der Ansprüche 1 oder 2, wobei der Schwingungskompensator (12) zwei, im Betriebszustand gegenläufig rotierende Kompensatormassen (121, 122) umfasst.

4. Kreuzkopf-Grossdieselmotor nach einem der vorangehenden Ansprüche, wobei der Schwingungskompensator (12) an einer Endseite (10) der Abtriebsseite und / oder an einer Endseite (10) des freien Endes des Kreuzkopf-Grossdieselmotors vorgesehen ist.

5. Kreuzkopf-Grossdieselmotor nach einem der vorangehenden Ansprüche, wobei die Kompensatormassen (121, 122) in Form von Teilscheiben, insbesondere halbmondartig ausgestaltet sind.

6. Kreuzkopf-Grossdieselmotor nach einem der vorangehenden Ansprüche, wobei die Kompensatormassen (121, 122) in Bezug auf die Kurbelwelle (3) vertikal übereinander angeordnet sind.

7. Kreuzkopf-Grossdieselmotor nach einem der vorangehenden Ansprüche, wobei die Kompensatormassen (121, 122) derart zueinander angeordnet sind, dass sie im Betriebszustand kämmend rotieren.

8. Kreuzkopf-Grossdieselmotor nach einem der vorangehenden Ansprüche, wobei die Kompensatormassen (121, 122) über ein mechanisches Kopplungsmittel antreibbar sind, insbesondere mittels einer Welle, eines Zahnrads, einer Kette, eines Zahnriemens oder mittels eines anderen Kopplungsmittels antreibbar sind.

9. Kreuzkopf-Grossdieselmotor nach einem der vorangehenden Ansprüche, wobei die Kompensatormassen mittels eines separaten Drehantriebs, insbesondere mittels eines elektrischen, hydraulischen, oder pneumatischen Drehantrieb antreibbar sind.

10. Schwingungskompensator für einen Kreuzkopf-Grossdieselmotor (1) nach einem der vorangehenden Ansprüche, wobei der Schwingungskompensator zwischen einer ersten Stützwand (81) und einer zweiten Stützwand (82) des Kreuzkopf-Grossdieselmotors (1) ausbildbar ist und bevorzugt derart an einer Zwischenwand (11) des Ständers (5) ausbildbar ist, dass die Zwischenwand (11) den Schwingungskompensator (12) zusätzlich trägt.

11. Schwingungskompensator nach Anspruch 10, wobei der Schwingungskompensator (12) zwei, im Betriebszustand gegenläufig rotierende Kompensatormassen (121, 122) umfasst.

12. Schwingungskompensator nach einem der Ansprüche 10 oder 11, wobei die Kompensatormassen (121, 122) in Form von Teilscheiben, insbesondere halbmondartig ausgestaltet sind.

13. Schwingungskompensator nach einem der Ansprüche 10 bis 12, wobei der Schwingungskompensator derart ausgestaltet ist, dass im Einbauzustand die Kompensatormassen (121, 122) in Bezug auf die Kurbelwelle (3) vertikal übereinander angeordnet sind, und / oder die Kompensatormassen (121, 122) bevorzugt derart zueinander angeordnet sind, dass sie im Betriebszustand kämmend rotieren.

14. Schwingungskompensator nach einem der Ansprüche 10 bis 13, wobei die Kompensatormasse (121, 122) über ein mechanisches Kopplungsmittel antreibbar ist, insbesondere mittels einer Welle, eines Zahnrads, einer Kette, eines Zahnriemens oder mittels eines anderen Kopplungsmittels antreibbar ist.

15. Schwingungskompensator nach einem der Ansprüche 10 bis 14, wobei die Kompensatormasse (121, 122) des Schwingungskompensators mittels eines separaten Drehantriebs, insbesondere mittels eines elektrischen, hydraulischen, oder pneumatischen Drehantrieb antreibbar ist.
